# EUROPEAN PATENT SPECIFICATION

(11) **EP 3 330 101 B1**
(45) Date of publication and mention of the grant of the patent: **04.09.2019**
(21) Application number: 16830630.6
(22) Date of filing: 29.07.2016
(51) Int. Cl.: B60C 11/03, B60C 5/00, B60C 11/13

(54) **PNEUMATIC TIRE**
LUFTREIFEN
PNEUMATIQUE

(30) Priority: 29.07.2015 JP 2015149920
(43) Date of publication of application: 06.06.2018
(73) Proprietor: Bridgestone Corporation, Tokyo 104-8340 (JP)
(72) Inventor: ASANUMA, Koji, Tokyo 104-8340 (JP)
(74) Representative: Oxley, Robin John George
(86) International application number: PCT/JP2016/072373
(87) International publication number: WO 2017/018527

(56) References cited:
- EP-A1- 2 676 814
- JP-A- 2013 133 080
- JP-A- 2013 151 236
- JP-A- 2014 076 764
- JP-A- 2015 123 936
- JP-A- 2015 123 936
- US-A1- 2012 285 592
- US-A1- 2013 240 101

## Description

### Technical Field

The present disclosure relates to a pneumatic tire where main grooves are provided in a tread surface on a vehicle inner side and a vehicle outer side.

### Related Art

As a conventional pneumatic tire, the pneumatic tire disclosed in JP-A No. 2005-053311, for example, is known.

This pneumatic tire has a specified mounting direction with respect to a vehicle and includes: an inner main groove on the vehicle inner side and an outer main groove on the vehicle outer side that are provided in a tread surface on both sides of a tire equator; and an inner circumferential direction groove that is provided in the tread surface between the inner main groove and an inner tread surface end and has a smaller groove width than the inner main groove and the outer main groove, with an inner side land portion being defined between the inner main groove and the inner circumferential direction groove and with an inner shoulder land portion being defined between the inner circumferential direction groove and the inner tread surface end. Additionally, in this pneumatic tire, because the inner main groove and the outer main groove are provided in the tread surface, water expulsion performance (wet performance) is ensured, and because braking direction force based on negative camber is applied to the inner shoulder land portion when the vehicle travels straight forward, uneven wear at the inner shoulder land portion is controlled. Attention is also drawn to the disclosure of US-2013/0240101-A, US-2012/0285592-A, JP-2015-123936-A and JP-2014-76764-A.

### SUMMARY OF INVENTION

### Technical Problem

However, although in this conventional pneumatic tire both wet performance and resistance to uneven wear can be ensured to a certain extent, as vehicles have become faster and lighter in weight in recent years, the appearance of a pneumatic tire whose resistance to uneven wear can be further improved while maintaining the performance of the pneumatic tire-particularly its wet performance-has been anticipated.

It is an object of the present disclosure to provide a pneumatic tire whose resistance to uneven wear can be effectively improved while maintaining its wet performance.

### Solution to Problem

This object can be achieved by a pneumatic tire as claimed in claim 1.

### Advantageous Effects of Invention

In the pneumatic tire to which negative camber is imparted, when the vehicle travels straight forward the tread surface on the vehicle inner side contacts the ground in a wider region than the tread surface on the vehicle outer side, so it is important to improve resistance to uneven wear while maintaining wet performance in the tread surface on the vehicle inner side where the ground contact region is wide. For this reason, in the present disclosure, if L is the distance from a side wall of the inner main groove to the inner tread surface end, the side wall being the one which is closer to the tread surface end, M is the groove width of the inner circumferential direction groove, and N is the width of the inner side land portion, by setting equal to or greater than 0.020 the value of the groove width M divided by the distance L, the occurrence of cracks in the groove bottom of the inner circumferential direction groove is prevented while making smooth the water expulsion in the circumferential direction and maintaining wet performance. Furthermore, by setting equal to or less than 0.100 the value of the groove width M divided by the distance L and setting in the range of 0.350 to 0.450 the value of the width N divided by the distance L, the widths of the inner side land portion and the inner shoulder land portion are both maintained at large values, whereby the rigidity of the land portions is improved and resistance to uneven wear in these land portions is improved. In this way, in the present disclosure, resistance to uneven wear can be effectively improved while maintaining wet performance.

### BRIEF DESCRIPTION OF DRAWING

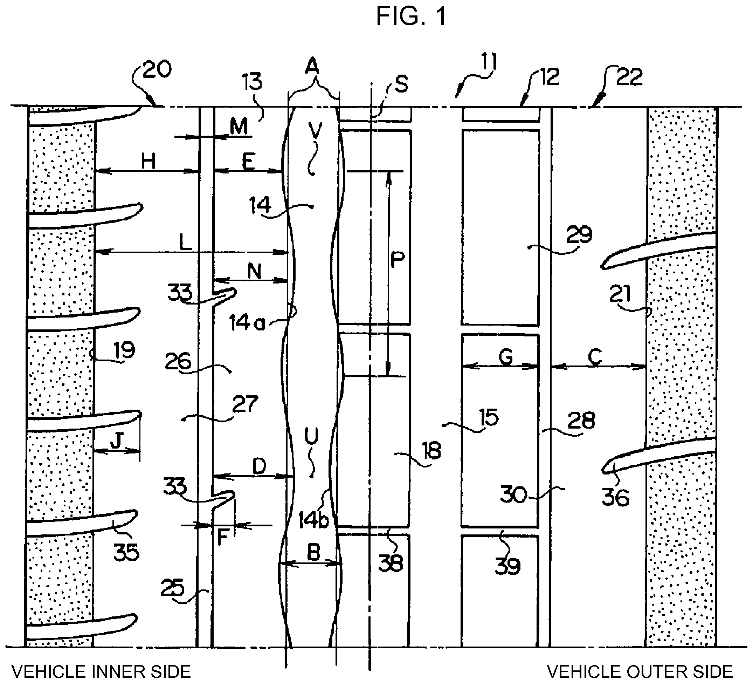

FIG. 1 is a developed view showing embodiment 1 of this invention.

### DESCRIPTION OF EMBODIMENT

Embodiment 1 of this invention will be described below on the basis of the drawing.

In FIG. 1, 11 is a pneumatic tire mounted on a vehicle-not shown in the drawings-such as a passenger vehicle, and the pneumatic tire 11 has, when mounting it to the vehicle, a specified mounting direction. The pneumatic tire 11 has a substantially cylindrical tread portion 12 on its radial direction outer end. An inner main groove 14 and an outer main groove 15 that have wide groove widths to ensure good water expulsion are defined on both sides of a tire equator S (tread center) in the tire width direction central portion of a tread surface 13 (outer peripheral surface) of the tread portion 12. Specifically, a single inner main groove 14 that extends continuously in the circumferential direction is defined in the tread surface 13 on the vehicle inner side of the tire equator S (the side nearer to the width direction center of the vehicle). Furthermore, a single outer main groove 15 that extends continuously in the circumferential direction is defined in the tread surface 13 on the vehicle outer side of the tire equator S (the side farther away from the width direction center of the vehicle). Additionally, the width direction centers of the inner main groove 14 and the outer main groove 15 are spaced equal distances from the tire equator S on the width direction outer sides thereof. The inner main groove 14 positioned on the vehicle inner side is configured from a pulsating groove whose groove width B repeatedly and continuously increases and decreases at a fixed pitch P in the circumferential direction as a result of an outer side wall 14a on the tire width direction outer side and an inner side wall 14b on the tire width direction inner side curving at a fixed amplitude.

Here, the width B is a value obtained by measuring, in the tire width direction, the distance between the outer side wall 14a and the inner side wall 14b of the inner main groove 14. The outer main groove 15 positioned on the vehicle outer side extends linearly in the circumferential direction without its groove width pulsating. Additionally, when the inner main groove 14 is configured from a pulsating groove as described above, water flowing into the inner main groove 14 is expelled forward in the direction of rotation while spreading along the curved outer side wall 14a and inner side wall 14b of the inner main groove 14-that is, along extension lines of the outer side wall 14a and the inner side wall 14b. For this reason, water expulsion is easily improved over the outer main groove 15 where the water is expelled linearly forward in the direction of rotation. It will be noted that in the present disclosure the outer main groove 15 may also be a pulsating groove. Furthermore, the outer main groove 15 may also bend in a zigzag manner. Additionally, when the inner main groove 14 and the outer main groove 15 are formed in the tread surface 13 as described above, a central land portion 18 that extends in the circumferential direction is defined between the inner main groove 14 and the outer main groove 15. Furthermore, an inner lateral land portion 20 that extends in the circumferential direction is defined between the inner main groove 14 and an inner tread surface end 19, and an outer lateral land portion 22 that extends in the circumferential direction is defined between the outer main groove 15 and an outer tread surface end 21.

Here, what are called the inner tread surface end 19 and the outer tread surface end 21 are tire width direction outermost (furthest away from the tire equator S) regions on the vehicle inner side and the vehicle outer side in the ground contact shape when the pneumatic tire 11 is mounted on a normal rim and bears a normal load in a state in which the pneumatic tire 11 has been inflated to a normal internal pressure. Additionally, "normal rim" means the "standard rim" prescribed by JATMA, the "design rim" prescribed by TRA, and the "measuring rim" prescribed by ETRTO. Furthermore, "normal internal pressure" means the "maximum air pressure" prescribed by JATMA, the maximum values listed in "Tire Load Limits at Various Cold Inflation Pressures" prescribed by TRA, and the "inflation pressures" prescribed by ETRTO. Moreover, "normal load" means the "maximum load capacity" prescribed by JATMA, the maximum values listed in "Tire Load Limits at Various Cold Inflation Pressures" prescribed by TRA, and the "load capacity" prescribed by ETRTO.

Furthermore, an inner circumferential direction groove 25 that has a smaller groove width than the inner main groove 14 and the outer main groove 15 and extends linearly in the circumferential direction is provided in the tread surface 13 (the inner lateral land portion 20) between the inner main groove 14 and the inner tread surface end 19. As a result, the inner lateral land portion 20 is divided in two in the width direction by the inner circumferential direction groove 25. An inner side land portion 26 that extends continuously in the circumferential direction is defined between the inner main groove 14 and the inner circumferential direction groove 25. An inner shoulder land portion 27 that extends continuously in the circumferential direction is defined between the inner circumferential direction groove 25 and the inner tread surface end 19. Furthermore, an outer circumferential direction groove 28 that has a smaller groove width than the inner main groove 14 and the outer main groove 15 is defined in the tread surface 13 (the outer lateral land portion 22) between the outer main groove 15 and the outer tread surface end 21. As a result, the outer lateral land portion 22 is divided in two in the width direction by the outer circumferential direction groove 28. An outer side land portion 29 that extends continuously in the circumferential direction is defined between the outer main groove 15 and the outer circumferential direction groove 28. An outer shoulder land portion 30 that extends continuously in the circumferential direction is defined between the outer circumferential direction groove 28 and the outer tread surface end 21.

It will be noted that although in this embodiment the inner circumferential direction groove 25 and the outer circumferential direction groove 28 extend linearly in the circumferential direction, in the present disclosure they may also bend in a zigzag manner. Here, L is the distance in the tire width direction from the outer side wall 14a of the inner main groove 14 to the inner tread surface end 19, M is the groove width of the inner circumferential direction groove 25, and N is the width of the inner side land portion 26. A value Q of the groove width M divided by the distance L is in the range of 0.020 to 0.100. Furthermore, a value R of the width N divided by the distance L is in the range of 0.350 to 0.450. Here, in a case where the outer side wall 14a of the inner main groove 14 curves at a fixed amplitude as described above or bends in a zigzag manner, the distance L becomes a length as measured along the tire width direction from a reference line A at which the amplitude of the curve or zigzag is zero to the inner tread surface end 19. Furthermore, the width N of the inner side land portion 26 becomes a length as measured along the tire width direction from the reference line A of the outer side wall 14a to the inner side wall of the inner circumferential direction groove 25.

Additionally, by configuring the pneumatic tire 11 as described above, the following action and effects can be obtained. Namely, in the pneumatic tire 11 to which negative camber is imparted, when the vehicle travels straight forward the tread surface 13 on the vehicle inner side contacts the ground in a wider region than the tread surface 13 on the vehicle outer side, so it is important to improve resistance to uneven wear while maintaining wet performance in the tread surface 13 on the vehicle inner side where the ground contact region is wide. For this reason, in this embodiment, by setting equal to or greater than 0.020 the value Q of the groove width M divided by the distance L, the meridian sectional area of the inner circumferential direction groove 25 is set to a large value. Because of this, as will be understood from test results described later, the expulsion of water in the circumferential direction by the inner circumferential direction groove 25 is made smooth and wet performance is maintained. Furthermore, by setting equal to or greater than 0.020 the value Q of the groove width M divided by the distance L, the occurrence of cracks in the groove bottom of the inner circumferential direction groove 25 is prevented. If the value Q of the groove width M divided by the distance L is less than 0.020, sometimes strain concentrates in the groove bottom of the inner circumferential direction groove 25 during the running of the pneumatic tire 11 and cracks occur. Furthermore, the meridian sectional area of the inner circumferential direction groove 25 is too narrow, so less water is expelled through the inner circumferential direction groove 25 and wet performance ends up dropping. Because of this, using a value less than 0.020 for the value Q of the groove width M divided by the distance L is not preferred.

Furthermore, in this embodiment, by setting equal to or less than 0.100 the value Q of the groove width M divided by the distance L and setting in the range of 0.350 to 0.450 the value R of the width N divided by the distance L, the widths of the inner side land portion 26 and the inner shoulder land portion 27 are both maintained at large values and the rigidity of the land portions 26 and 27 is improved. Because of this, as will be understood from test results described later, premature wear in these land portions 26 and 27 is controlled and resistance to uneven wear is improved. Because of what is described above, resistance to uneven wear can be effectively improved while substantially maintaining wet performance. If the value Q of the groove width M divided by the distance L exceeds 0.100, the width of either one of the inner side land portion 26 and the inner shoulder land portion 27 becomes narrow, and if the value R of the width N divided by the distance L is less than 0.350, the width of the inner side land portion 26 becomes narrow. Moreover, if the value R of the width N divided by the distance L exceeds 0.450, the width of the inner shoulder land portion 27 ends up becoming narrow. As a result, the rigidity of the inner side land portion 26 or the inner shoulder land portion 27 drops, whereby the inner side land portion 26 or the inner shoulder land portion 27 wears prematurely and resistance to uneven wear drops. Given this, using a value that exceeds 0.100 for the value Q of the groove width M divided by the distance L and using a value that is less than 0.350 or exceeds 0.450 for the value R of the width N divided by the distance L are not preferred. It will be noted that the lower limit value of the width of the outer circumferential direction groove 28 may also be made the same as the lower limit value of the width of the inner circumferential direction groove 25 in order to control cracking in the groove bottom of the outer circumferential direction groove 28 while maintaining the wet performance of the outer circumferential direction groove 28.

Here, when the inner main groove 14 is configured from a pulsating groove as described above, the width (rigidity) of the inner side land portion 26 increases and decreases (fluctuates) at the fixed pitch P in the circumferential direction; as a result, rigidity drops in the regions where the width of the inner side land portion 26 is narrow and sometimes uneven wear occurs in the inner side land portion 26 because of the running of the pneumatic tire 11. In order to address this situation, in this embodiment, plural side transverse grooves 33 that extend from the inner side wall of the inner circumferential direction groove 25 toward narrowest width positions U of the inner main groove 14 and terminate before reaching the inner main groove 14 (width direction inner ends of the side transverse grooves 33 are positioned between the inner main groove 14 and the inner circumferential direction groove 25) are provided in the inner side land portion 26. As a result, the rigidity of the regions where the width of the inner side land portion 26 is the largest is reduced by the side transverse grooves 33, and because of this, a situation where the width (rigidity) of the inner side land portion 26 increases and decreases (fluctuates) in the circumferential direction can be controlled.

Additionally, if D is the width of the inner side land portion 26 at the narrowest width positions U of the inner main groove 14, E is the width of the inner side land portion 26 at widest width positions V of the inner main groove 14, and F is the width direction length of the side transverse grooves 33, a value K of the width direction length F subtracted from the width D can be set in the range of 0.800 to 0.900 times the width E. The reason for this is because, as will be understood from test results described later, if the value K is less than 0.800 times the width E, regions where the width is considerably narrow (regions where the rigidity is low) repeatedly arise in the inner side land portion 26 and sometimes resistance to uneven wear drops, while if the value K exceeds 0.900 times the width E, fluctuations in rigidity based on the pulsing groove (the inner main groove 14) cannot be sufficiently controlled, so sometimes resistance to uneven wear drops. If the value K is in the aforementioned range, uneven wear in the inner side land portion 26 can be easily controlled.

Furthermore, in this embodiment, plural inner shoulder transverse grooves (lug grooves) 35 whose tire width direction outer ends open to the inner tread surface end 19 and whose tire width direction inner ends are positioned between the inner circumferential direction groove 25 and the inner tread surface end 19 (terminate before reaching the inner circumferential direction groove 25) are spaced equal distances apart from each other in the circumferential direction and provided in the inner shoulder land portion 27. Additionally, if H is the width of the inner shoulder land portion 27 and J is the width direction length of the inner shoulder transverse grooves 35, the width direction length J can be set in the range of 0.350 to 0.500 times the width H. The reason for this is because if the width direction length J is less than 0.350 times the width H, sometimes the expulsion of water through the inner shoulder transverse grooves 35 becomes insufficient and wet performance drops. Conversely, if the width direction length J exceeds 0.500 times the width H, sometimes regions where the rigidity is considerably low repeatedly occur in the circumferential direction in the inner shoulder land portion 27 and sometimes resistance to uneven wear drops. If the width direction length J is in the range of 0.350 to 0.500 times the width H as described above, resistance to uneven wear can be further improved while maintaining wet performance. It will be noted that plural outer shoulder transverse grooves (lug grooves) 36 that are the same as the inner shoulder transverse grooves 35 and are spaced equal distances apart from each other in the circumferential direction are provided in the outer shoulder land portion 30. Tire width direction outer ends of the outer shoulder transverse grooves 36 open to the outer tread surface end 21, and tire width direction inner ends of the outer shoulder transverse grooves 36 are positioned between the outer circumferential direction groove 28 and the outer tread surface end 21. In other words, the tire width direction inner ends of the outer shoulder transverse grooves 36 terminate between the outer circumferential direction groove 28 and the outer tread surface end 21.

Furthermore, in this embodiment, a width C of the outer shoulder land portion 30 is set larger than a width G of the outer side land portion 29, whereby the rigidity of the outer shoulder land portion 30, to which a large lateral force is applied when the vehicle turns, is made higher. Because of this, the amount of collapse at the outer shoulder land portion 30 can be reduced to control uneven wear. Here, when the outer circumferential direction groove 28 bends in a zigzag manner, the width G of the outer side land portion 29 and the width C of the outer shoulder land portion 30 become the values of the surface areas of the outer side land portion 29 and the outer shoulder land portion 30 divided by the once-around lengths of the outer side land portion 29 and the outer shoulder land portion 30. It will be noted that in the present embodiment the width C of the outer shoulder land portion 30 is made larger than the width of the central land portion 18 for the same reasons as described above. Furthermore, 38 and 39 are plural transverse grooves that are formed in the central land portion 18 and the outer side land portion 29, respectively, are spaced equal distances apart from each other in the circumferential direction, and are disposed on the same straight lines extending in the width direction. Both ends of the transverse grooves 38 open to the inner main groove 14 and the outer main groove 15, and both ends of the transverse grooves 39 open to the outer main groove 15 and the outer circumferential direction groove 28. Here, the transverse grooves 38 and 39 extend in the tire width direction, but they may also slope a predetermined angle relative to the tire width direction.

### Working Examples

Next, test example 1 will be described. In this test, a conventional tire 1 in which the value of M/L (the value Q of the groove width M divided by the distance L) was 0.110, comparison tires 1 and 2 in which the values of M/L were 0.010 and 0.018, respectively, working tires 1, 2, and 3 in which the values of M/L were 0.020, 0.060, and 0.100, respectively, and comparison tires 3 and 4 in which the values of M/L were 0.110 and 0.150, respectively, were prepared. Here, the value of N/L (the value R of the width N divided by the distance L) in the conventional tire 1 was 0.600, the values of N/L in the comparison tires 1 to 4 and the working tires 1 to 3 were all 0.442, and the values of (D - F)/E (a value obtained by dividing by E the value K of the width direction length F subtracted from the width D) in the comparison tires 1 to 4 and the working tires 1 to 3 were all 0.858. It will be noted that in the conventional tire 1 there was no value of (D - F)/E because there were no side transverse grooves. Moreover, the values of J/H (the value of the width direction length J divided by the width H) in the conventional tire 1, in the comparison tires 1 to 4, and in the working tires 1 to 3 were all 0.421.

Here, the tire sizes of the conventional tire, the comparison tires, and the working tires were all 165/55R15, and the configurations of the tread patterns other than the specifications described above were as shown in FIG. 1. Next, each of the tires was mounted on the normal rim, inflated to the normal internal pressure, mounted in the normal mounting direction to a vehicle, and introduced to an asphalt road surface with a water depth of 5 mm at 60 km/hour while bearing the normal load, then full braking was performed, and the braking distance was measured. The inverses of the measurement results were indexed, with 100 serving for the conventional tire 1, and used as the wet performance. Here, the larger the index was, the better wet performance was. Furthermore, the vehicle was run 10,000 km on a course comprising 70% paved high-speed road and 30% paved normal road, both the amount of wear of the tread rubber at the central land portion and the amount of wear of the tread rubber at the inner shoulder land portion when travel ended were measured, and the ratios of these amounts of wear were indexed to find the resistance to uneven wear. The results of the wet performance and resistance to uneven wear that were found are shown in Table 1 below. As will be understood from these test results, when the value of the groove width M divided by the distance L is in the range of 0.020 to 0.100, resistance to uneven wear can be effectively improved while maintaining wet performance.

**Table 1**

| | Conventional Tire | Comparison Tires | | Working Tire |
|---|---|---|---|---|
| | 1 | 1 | 2 | 1 |
| M/L | 0.110 | 0.010 | 0.018 | 0.020 |
| Wet Performance | 100 | 96 | 97 | 100 |
| Resistance to Uneven Wear | 100 | 103 | 103 | 103 |

| | Working Tires | | Comparison Tires | |
|---|---|---|---|---|
| | 2 | 3 | 3 | 4 |
| M/L | 0.060 | 0.100 | 0.110 | 0.150 |
| Wet Performance | 100 | 100 | 100 | 101 |
| Resistance to Uneven Wear | 104 | 103 | 98 | 98 |

Next, test example 2 will be described. In this test, comparison tires 5 and 6 in which the values of N/L (the value R of the width N divided by the distance L) were 0.200 and 0.330, respectively, working tires 4, 2, and 5 in which the values of N/L were 0.350, 0.442, and 0.450, respectively, and comparison tires 7 and 8 in which the values of N/L were 0.470 and 0.500, respectively, were prepared. Here, the values of M/L in the comparison tires 5 to 8 and in the working tires 4 and 5 were all 0.060, and the values of (D - F)/E in the comparison tires 5 to 8 and in the working tires 4 and 5 were all 0.858 like in test example 1. Moreover, the values of J/H in the comparison tires 5 to 8 and in the working tires 4 and 5 were all 0.421 like in test example 1.

Here, the tire sizes of the comparison tires and the working tires were all 165/55R15, and the configurations of the tread patterns other than what is described above were the same as in test example 1. Next, the same uneven wear resistance test as described above was performed with respect to each tire to find the resistance to uneven wear. It will be noted that in this test, regarding tires in which the value of N/L was less than 0.442, both the amount of wear of the tread rubber at the central land portion and the amount of wear of the tread rubber at the inner side land portion were measured, and the ratios of these amounts of wear were indexed to find the resistance to uneven wear. Regarding tires in which the value of N/L was equal to or greater than 0.442, both the amount of wear of the tread rubber at the central land portion and the amount of wear of the tread rubber at the inner shoulder land portion were measured, and the ratios of these amounts of wear were indexed to find the resistance to uneven wear. The results of the resistance to uneven wear are shown in Table 2 below. Furthermore, the same wet test as described above was performed with respect to each tire, but the result was 100 in every tire. As will be understood from these test results, when the value of the width N divided by the distance L is in the range of 0.350 to 0.450, resistance to uneven wear can be effectively improved while maintaining wet performance.

**Table 2**

| | Comparison Tires | | Working Tires | |
|---|---|---|---|---|
| | 5 | 6 | 4 | 2 |
| N/L | 0.200 | 0.330 | 0.350 | 0.442 |
| Resistance to Uneven Wear | 98 | 99 | 102 | 104 |

| | Working Tire | Comparison Tires | | |
|---|---|---|---|---|
| | 5 | 7 | 8 | |
| N/L | 0.450 | 0.470 | 0.500 | |
| Resistance to Uneven Wear | 103 | 99 | 99 | |

Next, test example 3 will be described. In this test, working tires 6, 7, 8, 2, 9, 10, and 11 in which the values of (D - F)/E (the value obtained by dividing by the width E the value K of the width direction length F substracted from the width D) were 0.775, 0.790, 0.800, 0.858, 0.900, 0.910, and 0.930, respectively, were prepared. Here, the values of M/L in the working tires 6 to 11 were all the same 0.060 as in the working tire 2, the values of N/L were all the same 0.442 as in the working tire 2, and the values of J/H were all the same 0.421 as in the working tire 2. Furthermore, the tire sizes of the working tires 6 to 11 were all 165/55R15, and the configurations of the tread patterns other than what is described above were the same as in test example 1. Next, the same uneven wear resistance test as described above was performed with respect to each tire to find the resistance to uneven wear. In this test, both the amount of wear of the tread rubber at the central land portion and the amount of wear of the tread rubber at the inner side land portion were measured, and the ratios of these amounts of wear were indexed to find the resistance to uneven wear. The results of the resistance to uneven wear are shown in Table 3 below. Furthermore, the same wet test as described above was performed with respect to each tire, but the result was 100 in every tire. As will be understood from these test results, when the value obtained by dividing by the width E the value K of the width direction length F subtracted from the width D is in the range of 0.800 to 0.900, resistance to uneven wear can be effectively improved while maintaining wet performance.

**Table 3**

| | Working Tires | | | |
|---|---|---|---|---|
| | 6 | 7 | 8 | 2 |
| (D - F)/E | 0.775 | 0.790 | 0.800 | 0.858 |
| Resistance to Uneven Wear | 101 | 102 | 102 | 104 |

| | Working Tires | | | |
|---|---|---|---|---|
| | 9 | 10 | 11 | |
| (D - F)/E | 0.900 | 0.910 | 0.930 | |
| Resistance to Uneven Wear | 103 | 102 | 102 | |

Next, test example 4 will be described. In this test, working tires 12, 13, 14, 2, 15, 16, and 17 in which the values of J/H (the value of the width direction length J divided by the width H) were 0.280, 0.330, 0.350, 0.421, 0.500, 0.550, and 0.620, respectively, were prepared. Here, the values of M/L in the working tires 12 to 17 were all the same 0.060 as in the working tire 2, the values of N/L were all the same 0.442 as in the working tire 2, and the values of (D - F)/E were all the same 0.858 as in the working tire 2. Furthermore, the tire sizes of the working tires 12 to 17 were all 165/55R15, and the configurations of the tread patterns other than what is described above were the same as in test example 1. Next, the same wet test and uneven wear resistance test as described above were performed with respect to each tire. The results are shown in Table 4 below. As will be understood from these test results, when the value of the width direction length J divided by the width H is in the range of 0.350 to 0.500, resistance to uneven wear can be effectively improved while maintaining wet performance.

**Table 4**

| | Working Tires | | | |
|---|---|---|---|---|
| | 12 | 13 | 14 | 2 |
| J/H | 0.280 | 0.330 | 0.350 | 0.421 |
| Wet Performance | 99 | 99 | 100 | 100 |
| Resistance to Uneven Wear | 104 | 104 | 104 | 104 |

| | Working Tires | | | |
|---|---|---|---|---|
| | 15 | 16 | 17 | |
| J/H | 0.500 | 0.550 | 0.620 | |
| Wet Performance | 100 | 100 | 100 | |
| Resistance to Uneven Wear | 103 | 101 | 101 | |

### Industrial Applicability

The present disclosure can be applied to the industrial field of pneumatic tires where main grooves are provided in a tread surface on a vehicle inner side and a vehicle outer side.

## Claims

1. A pneumatic tire (11) having a specified mounting direction with respect to a vehicle, the pneumatic tire (11) comprising:
an inner main groove (14) on a vehicle inner side and an outer main groove (15) on a vehicle outer side, which are provided in a tread surface (13) on both sides of a tire equator S;
wherein the inner main groove (14) and the outer main groove (15) extend continuously in the circumferential direction;
and an inner circumferential direction groove (25) that is provided in the tread surface (13) between the inner main groove (14) and an inner tread surface end (19) and that has a smaller groove width than the inner main groove (14) and the outer main groove (15),
wherein an inner side land portion (26) that extends continuously in a circumferential direction is defined between the inner main groove (14) and the inner circumferential direction groove (25), and an inner shoulder land portion (27) that extends continuously in the circumferential direction is defined between the inner circumferential direction groove (25) and the inner tread surface end (19), and
wherein, if L is a distance from a side wall (14a) of the inner main groove (14) to the inner tread surface end (19), the side wall (14a) being the one which is closer to the inner tread surface end (19), M is the groove width of the inner circumferential direction groove (25), and N is a width of the inner side land portion (26), a value of the groove width M divided by the distance L is in a range of 0.020 to 0.100, and a value of the width N divided by the distance L is in a range of 0.350 to 0.450, wherein:
the inner main groove (14) is configured from a pulsating groove whose groove width B repeatedly and continuously increases and decreases at a fixed pitch P in the circumferential direction so that the width of the inner side land portion (26) increases and decreases at the fixed pitch P in the circumferential direction, and
side transverse grooves (33) that extend from the inner circumferential direction groove (25) toward narrowest width positions U of the inner main groove (14) and terminate before reaching the inner main groove (14) are provided in the inner side land portion (26).

2. The pneumatic tire (11) according to claim 1, wherein, if D is a width of the inner side land portion (26) at the narrowest width positions U of the inner main groove (14), E is a width of the inner side land portion (26) at widest width positions V of the inner main groove (14), and F is a width direction length of the side transverse grooves (33), a value of the width direction length F subtracted from the width D is in a range of 0.800 to 0.900 times the width E.

3. The pneumatic tire (11) according to claim 1 or 2, wherein:
plural inner shoulder transverse grooves (35) whose width direction outer ends open to the inner tread surface end (19) and whose width direction inner ends are positioned between the inner circumferential direction groove (25) and the inner tread surface end (19) are spaced apart from each other in the circumferential direction and provided in the inner shoulder land portion (27), and
if H is a width of the inner shoulder land portion (27) and J is a width direction length of the inner shoulder transverse grooves (35), the width direction length J is in a range of 0.350 to 0.500 times the width H.

4. The pneumatic tire (11) according to any one of claims 1 to 3, wherein:
an outer circumferential direction groove (28), that has a smaller groove width than the inner main groove (14) and the outer main groove (15), is provided in the tread surface (13) between the outer main groove (15) and an outer tread surface end (21), whereby an outer side land portion (29) that extends continuously in the circumferential direction is defined between the outer main groove (15) and the outer circumferential direction groove (28), and an outer shoulder land portion (30) that extends continuously in the circumferential direction is defined between the outer circumferential direction groove (28) and the outer tread surface end (21), and
a width C of the outer shoulder land portion (30) is larger than a width G of the outer side land portion (29).

## Patentansprüche

1. Luftreifen (11), der eine vorgeschriebene Montagerichtung in Bezug auf ein Fahrzeug aufweist, wobei der Luftreifen (11) Folgendes umfasst:
eine innere Hauptrille (14) auf einer Fahrzeuginnenseite und eine äußere Hauptrille (15) auf einer Fahrzeugaußenseite, die in einer Lauffläche (13) auf beiden Seiten eines Reifenäquators S bereitgestellt werden,
wobei sich die innere Hauptrille (14) und die äußere Hauptrille (15) durchgehend in der Umfangsrichtung erstrecken,
und
eine innere Umfangsrichtungsrille (25), die in der Lauffläche (13) zwischen der inneren Hauptrille (14) und einem inneren Laufflächenende (19) bereitgestellt wird und die eine kleinere Rillenbreite aufweist als die innere Hauptrille (14) und die äußere Hauptrille (15),
wobei ein innerer Seitenstegabschnitt (26), der sich durchgehend in einer Umfangsrichtung erstreckt, zwischen der inneren Hauptrille (14) und der inneren Umfangsrichtungsrille (25) definiert wird und ein innerer Schulterstegabschnitt (27), der sich durchgehend in einer Umfangsrichtung erstreckt, zwischen der inneren Umfangsrichtungsrille (25) und dem inneren Laufflächenende (19) definiert wird, und
wobei, wenn L eine Entfernung von einer Seitenwand (14a) der inneren Hauptrille (14) bis zu dem inneren Laufflächenende (19) ist, die Seitenwand (14a) diejenige ist die dem inneren Laufflächenende (19) näher ist, M die Rillenbreite der inneren Umfangsrichtungsrille (25) ist und N eine Breite des inneren Seitenstegabschnitts (26) ist, ein Wert der Rillenbreite M, dividiert durch die Entfernung L, in einem Bereich von 0,020 bis 0,100 liegt und ein Wert der Breite N, dividiert durch die Entfernung L, in einem Bereich von 0,350 bis 0,450 liegt, wobei:
die innere Hauptrille (14) aus einer pulsierenden Rille konfiguriert ist, deren Rillenbreite wiederholt und durchgehend mit einer festen Teilung P in der Umfangsrichtung zunimmt und abnimmt, so dass die Breite des inneren Seitenstegabschnitts (26) mit der festen Teilung P in der Umfangsrichtung zunimmt und abnimmt, und
Seitenquerrillen (33), die sich von der inneren Umfangsrichtungsrille (25) zu Positionen U schmalster Breite der inneren Hauptrille (14) hin erstrecken und enden, bevor sie die innere Hauptrille (14) erreichen, in dem inneren Seitenstegabschnitt (26) bereitgestellt werden.

2. Luftreifen (11) nach Anspruch 1, wobei, wenn D eine Breite des inneren Seitenstegabschnitts (26) an den Positionen U schmalster Breite der inneren Hauptrille (14) ist, E eine Breite des inneren Seitenstegabschnitts (26) an Positionen V breitester Breite der inneren Hauptrille (14) ist und F eine Länge der Seitenquerrillen (33) in Breitenrichtung ist, ein Wert der Länge F in Breitenrichtung, subtrahiert von der Breite D, in einem Bereich des 0,800- bis 0,900-Fachen der Breite E liegt.

3. Luftreifen (11) nach Anspruch 1 oder 2, wobei:
mehrere innere Schulterquerrillen (35), deren in Breitenrichtung äußere Enden sich zu der inneren Laufflächenende (19) öffnen und deren in Breitenrichtung innere Enden zwischen der inneren Umfangsrichtungsrille (25) und dem inneren Laufflächenende (19) angeordnet sind, in der Umfangsrichtung voneinander beabstandet sind und in dem inneren Schulterstegabschnitt (27) bereitgestellt werden und,
wenn H eine Breite des inneren Schulterstegabschnitts (27) ist und J eine Länge der inneren Schulterquerrillen (35) in Breitenrichtung ist, die Länge J in Breitenrichtung in einem Bereich des 0,350- bis 0,500-Fachen der Breite H liegt.

4. Luftreifen (11) nach einem der Ansprüche 1 bis 3, wobei:
eine äußere Umfangsrichtungsrille (28), die eine kleinere Rillenbreite aufweist als die innere Hauptrille (14) und die äußere Hauptrille (15), in der Lauffläche (13) zwischen der äußeren Hauptrille (15) und einem äußeren Laufflächenende (21) bereitgestellt wird, wodurch ein äußerer Seitenstegabschnitt (29), der sich durchgehend in der Umfangsrichtung erstreckt, zwischen der äußeren Hauptrille (15) und der äußeren Umfangsrichtungsrille (28) definiert wird und ein äußerer Schulterstegabschnitt (30), der sich durchgehend in der Umfangsrichtung erstreckt, zwischen der äußeren Umfangsrichtungsrille (28) und dem äußeren Laufflächenende (21) definiert wird, und
eine Breite C des äußeren Schulterstegabschnitts (30) größer ist als eine Breite G des äußeren Seitenstegabschnitts (29).

## Revendications

1. Bandage pneumatique (11) ayant une direction de montage spécifiée par rapport à un véhicule, le bandage pneumatique (11) comprenant :
une rainure principale interne (14) sur un côté interne du véhicule, et une rainure principale externe (15) sur un côté externe du véhicule, agencées dans une surface de bande de roulement (13), sur les deux côtés d'un équateur du bandage pneumatique S ;
dans lequel la rainure principale interne (14) et la rainure principale externe (15) s'étendent en continu dans la direction circonférentielle ; et
une rainure à direction circonférentielle interne (25) agencée dans la surface de bande de roulement (13) entre la rainure principale interne (14) et une extrémité interne de la surface de bande de roulement (19), et ayant une largeur de rainure inférieure à celle de la rainure principale interne (14) et de la rainure principale externe (15) ;
dans lequel une partie d'appui du côté interne (26) s'étendant en continu dans une direction circonférentielle est définie entre la rainure principale interne (14) et la rainure à direction circonférentielle interne (25), et une partie d'appui d'épaulement interne (27) s'étendant en continu dans la direction circonférentielle étant définie entre la rainure à direction circonférentielle interne (25) et l'extrémité interne de la surface de bande de roulement (19) ; et
dans lequel, lorsque L représente une distance entre une paroi latérale (14a) de la rainure principale interne (14) et l'extrémité interne de la surface de bande de roulement (19), la paroi latérale (14a) étant la paroi plus proche de l'extrémité interne de la surface de bande de roulement (19), M représentant la largeur de rainure de la rainure à direction circonférentielle interne (25), et N représentant une largeur de la partie d'appui du côté interne (26), une valeur de la largeur de rainure M divisée par la distance L est comprise dans un intervalle allant de 0,020 à 0,100, et une valeur de la largeur N divisée par la distance L est comprise dans un intervalle allant de 0,350 à 0,450, dans lequel :
la rainure principale interne (14) est configurée à partir d'une rainure à pulsation, dont la largeur de rainure B est accrue et réduite de manière répétée et continue à un pas fixe P dans la direction circonférentielle, de sorte que la largeur de la partie d'appui du côté interne (26) est accrue et réduite à un pas fixe P dans la direction circonférentielle ; et
des rainures transversales latérales (33) s'étendant à partir de la rainure à direction circonférentielle interne (25) vers des positions à largeur la plus étroite U de la rainure principale interne (14) et se terminant avant d'atteindre la rainure principale interne (14), sont agencées dans la partie d'appui du côté interne (26).

2. Bandage pneumatique (11) selon la revendication 1, dans lequel, lorsque D représente une largeur de la partie d'appui du côté interne (26) au niveau des positions à largeur la plus étroite U de la rainure principale interne (14), E représentant une largeur de la partie d'appui du côté interne (26) au niveau de positions à largeur maximale V de la rainure principale interne (14), et F représentant une longueur dans la direction de la largeur des rainures transversales latérales (33), une valeur de la longueur dans la direction de la largeur F soustraite de la largeur D est comprise dans un intervalle représentant 0,800 à 0,900 fois la largeur E.

3. Bandage pneumatique (11) selon les revendications 1 ou 2, dans lequel :
plusieurs rainures transversales d'épaulement internes (35), dont les extrémités externes dans la direction de la largeur sont ouvertes vers l'extrémité interne de la surface de bande de roulement (19), et dont les extrémités internes dans la direction de la largeur sont positionnées entre la rainure à direction circonférentielle interne (25) et l'extrémité interne de la surface de bande de roulement (19), sont espacées les unes des autres dans la direction circonférentielle et agencées dans la partie d'appui d'épaulement interne (27) ; et
lorsque H représente une largeur de la partie d'appui d'épaulement interne (27), J représentant une longueur dans la direction de la largeur des rainures transversales d'épaulement internes (35), la longueur dans la direction de la largeur J est comprise dans un intervalle représentant 0,350 à 0,500 fois la largeur H.

4. Bandage pneumatique (11) selon l'une quelconque des revendications 1 à 3, dans lequel :
une rainure à direction circonférentielle externe (28), ayant une largeur de rainure inférieure à celle de la rainure principale interne (14) et de la rainure principale externe (15), est agencée dans la surface de bande de roulement (13) entre la rainure principale externe (15) et une extrémité externe de la bande de roulement (21), une partie d'appui du côté externe (29) s'étendant en continu dans la direction circonférentielle étant ainsi définie entre la rainure principale externe (15) et la rainure à direction circonférentielle externe (28), et une partie d'appui d'épaulement externe (30) s'étendant en continu dans la direction circonférentielle étant définie entre la rainure à direction circonférentielle externe (28) et l'extrémité externe de la surface de bande de roulement (21) ; et
une largeur C de la partie d'appui d'épaulement externe (30) est supérieure à une largeur G de la partie d'appui d'épaulement externe (29).
